# DEMANDE DE BREVET EUROPEEN

(11) **EP 1 359 396 A1**
(43) Date de publication de la demande: **05.11.2003**
(21) Numéro de dépôt: 03354034.5
(22) Date de dépôt: 17.04.2003
(51) Int. Cl.: G01F 11/08

(54) **Dispositif de dosage volumétrique à capacité déformable et système de distribution l' utilisant**

(30) Priorité: 22.04.2002 FR 0204994
(71) Demandeur: Brousseau, Guillaume, 38920 Crolles (FR)
(72) Inventeur: Brousseau, Guillaume, 38920 Crolles (FR)
(74) Mandataire: Hecké, Gérard

(57) **Abrégé**

L'invention a pour objet un dispositif de dosage volumétrique à capacité variable, comprenant une enceinte (2) à paroi déformable. L'enceinte (2) du dispositif comporte une zone intermédiaire interposée entre une capacité (3) et une zone de jonction (6) à un réservoir de stockage du produit à délivrer. Cette zone intermédiaire délimite l'orifice de remplissage (4) de la capacité (3), et est une zone d'affaiblissement (7) de l'enceinte (2) qui est prioritairement déformable sous l'effet d'une compression de la paroi de l'enceinte (2) délimitant la capacité (3), avant déformation de cette dernière en vue de la délivrance du produit qu'elle contient. Une compression de l'enceinte (2) exercée par l'utilisateur en vue de réduire le volume de la capacité (3) provoque spontanément au préalable, à partir de ce même geste, la fermeture de l'orifice de remplissage (4). L'invention concerne, également, un système de distribution comportant un réservoir à produit liquide ou pâteux muni dudit dispositif de dosage volumétrique.

## Description

### Domaine technique de l'invention

L'invention a pour objet un dispositif de dosage volumétrique à capacité variable, ce dispositif comprenant une enceinte à paroi déformable délimitant la capacité , cette dernière comportant à son extrémité proximale un orifice de remplissage et à son extrémité distale un orifice de vidange, l'enceinte délimitant en outre à son extrémité proximale une zone de jonction avec un réservoir de stockage du produit à délivrer.

L'invention a également pour objet un système de distribution comportant un réservoir à produit liquide ou pâteux muni dudit dispositif de dosage volumétrique.

### Etat de la technique

On connaît des dispositifs de dosage volumétrique à capacité variable, prévus pour équiper une réserve de stockage de produit liquide ou pâteux. Ces dispositifs sont destinés à permettre une délivrance partielle et répétée du produit stocké. D'une manière générale, la capacité comporte un orifice de remplissage du produit en provenance de la réserve et d'un orifice de délivrance du produit préalablement admis. La capacité est aussi équipée de moyens de jonction à la réserve de stockage, de manière à mettre en relation leur volume intérieur, et de moyens de variation de son volume. Pour l'obtention fiable de la dose du produit délivrée, en correspondance avec le volume de la capacité, les phases de remplissage et de vidange de cette dernière s'effectuent successivement. Plus précisément, il est souhaitable de prévoir des dispositions pour obturer l'orifice de remplissage de la capacité pendant la phase de délivrance du produit. Par ailleurs, il est aussi nécessaire de prévoir des dispositions pour autoriser une admission d'air à l'intérieur de la capacité lors de ses diverses variations de son volume.

Selon un premier type de doseur volumétrique à capacité variable, la variation de volume de la capacité est obtenue par son agencement en vérin ou analogue. Un tel agencement permet de résoudre simplement les difficultés de mise en oeuvre des dispositions susvisées, relatives à l'obturation de l'orifice de remplissage et à la présence d'évents.

Cependant, ce type de doseur volumétrique reste d'un coût rédhibitoire pour un usage unique. On comprendra par usage unique le fait que le dispositif soit prévu pour équiper une seule réserve jusqu'à épuisement du produit qu'elle contient. En outre, sa structure complexe n'est guère adaptée à un usage en milieu préservé, au regard de l'hygiène notamment, tel que pour des produits alimentaires, ou à une utilisation pour le dosage d'un produit visqueux sujet à cristallisation.

Selon un deuxième type de doseur à capacité variable, la capacité est formée d'une enceinte à paroi déformable, équipée d'une bride pour sa fixation au goulot d'un réservoir par exemple. La déformation de la paroi pour sa vidange, est provoquée par sa compression par l'utilisateur. Lorsque la capacité est vidée, l'utilisateur cesse de comprimer la paroi qui reprend spontanément sa forme initiale, ce qui provoque à nouveau le remplissage de la capacité. L'orifice de délivrance du produit est en outre mis à profit pour former un évent d'admission d'air à l'intérieur de la capacité lors de son remplissage.

Ce type de doseur volumétrique, d'un coût modique, autorise économiquement son usage unique. Cependant, il ne permet pas de contrôler rigoureusement la quantité de produit délivré, en raison notamment de l'absence de fermeture de l'orifice de remplissage de la capacité pendant sa vidange.

Ainsi, le document GB-A-247740 décrit un dispositif de dosage d'un liquide contenu dans une bouteille. Le dispositif est constitué par une capsule disposée sur le goulot d'une bouteille et comportant une chambre en matière plastique destinée à contenir une dose de liquide. La partie supérieure de la chambre comporte une fente dans laquelle est introduit un petit tube en matière plastique destiné à réaliser une fermeture étanche de la capsule. Pour vidanger le liquide contenu dans la chambre de la capsule, une pression latérale est exercée sur la capsule, de manière à ouvrir la fente de la chambre et à laisser sortir le liquide.

Il en ressort que d'une manière générale, il est habituel dans le domaine de trouver un compromis entre la simplicité de la structure du dispositif permettant son usage unique et sa maintenance aisée, et la fiabilité de la dose de produit délivré.

### Objet de l'invention

Le but de la présente invention est de proposer un dispositif de dosage volumétrique à capacité variable, prévu pour équiper un réservoir de produit, liquide ou pâteux notamment, qui fasse abstraction de la recherche d'un tel compromis.

Plus particulièrement, il est visé par la présente invention de proposer un tel dispositif de dosage dont la structure, simple, offre néanmoins toutes les garantis de fiabilité quant à la quantité de produit délivré.

Ce but est atteint par un dispositif de dosage volumétrique selon les revendications annexées.

Plus particulièrement, ce but est atteint par le fait que :
- l'enceinte comporte une zone intermédiaire interposée entre la capacité et la zone de jonction, qui délimite l'orifice de remplissage de la capacité,
- cette zone intermédiaire étant une zone d'affaiblissement de l'enceinte qui est prioritairement déformable sous l'effet d'une compression de la paroi de l'enceinte délimitant la capacité, avant déformation de cette dernière en vue de la délivrance du produit qu'elle contient, de telle sorte qu'une compression de l'enceinte exercée par l'utilisateur en vue de réduire le volume de la capacité pour en extraire une dose de produit, provoque spontanément au préalable, à partir de ce même geste, la fermeture de l'orifice de remplissage,
- ladite zone d'affaiblissement étant formée d'au moins un rétreint ménagé à l'extrémité proximale de la capacité.

La zone d'affaiblissement constitue des moyens de fermeture de l'orifice de remplissage, qui sont mis en oeuvre sous l'effet d'une compression exercée par l'utilisateur sur l'enceinte délimitant la capacité, naturellement avant déformation globale de cette dernière.

Ces dispositions sont telles, qu'une compression de l'enceinte exercée par l'utilisateur en vue de réduire le volume de la capacité pour en extraire une dose de produit, provoque spontanément au préalable, la fermeture de l'orifice de remplissage. Il en découle qu'à partir du même geste habituel effectué par l'utilisateur pour comprimer l'enceinte, il est certain de délivrer la seule quantité de produit que contenait la capacité avant sa déformation.

Selon diverses caractéristiques particulières de la zone d'affaiblissement de l'enceinte, prises seules ou en combinaison, la conformation globale de l'enceinte étant une conformation de révolution, le rétreint est préférentiellement formé d'au moins un relief en creux occupant partiellement la périphérie de l'enceinte dans la zone de l'orifice de remplissage de la capacité. En outre, l'épaisseur de la paroi de l'enceinte délimitant le rétreint est localement plus faible, pour favoriser son fléchissement sur elle-même lors de la compression de l'enceinte exercée par l'utilisateur.

On comprendra que cette épaisseur moindre, et le cas échéant la formation localisée du rétreint sur une partie seulement de la périphérie de la paroi, sont préférentiellement prises en combinaison avec une autre caractéristique du dispositif de l'invention. Cette caractéristique consiste dans un aménagement avantageux, tel que décrit plus loin, d'une zone spécifique de la paroi de l'enceinte délimitant la capacité, contre laquelle l'utilisateur prend appui pour la déformer.

De préférence, la zone d'affaiblissement de l'enceinte est prolongée par une zone de jonction du dispositif à un réservoir contenant le produit à délivrer. Cette zone de jonction, elle aussi avantageusement déformable, est notamment conformée en gaine d'enserrement du goulot du réservoir. En outre et de préférence, cette zone de jonction comporte à son débouché proximal une collerette d'appui pour un organe de verrouillage, telle qu'une bride, de la jonction de l'enceinte sur le réservoir.

Selon une forme particulière de réalisation, la paroi de l'enceinte délimitant la capacité comporte l'aménagement susvisé d'une zone d'appui pour l'utilisateur visant à sa déformation.

Cet aménagement consiste à doter la paroi de l'enceinte d'un organe d'appui, agencé pour répartir la pression en assurant une déformation contrôlée, et vidanger la capacité progressivement depuis son extrémité proximale vers son extrémité distale où est ménagé l'orifice de vidange de la capacité. Cet aménagement vise aussi à répartir de manière homogène le long de la paroi de la capacité, jusqu'à déformation complète par écrasement de celle-ci contre elle-même, l'effort résultant de la poussée exercée par l'utilisateur sur l'organe d'appui.

Cet organe d'appui est notamment ménagé sur la paroi de l'enceinte délimitant la capacité, avec une orientation en correspondance avec la déformation recherchée de la zone d'affaiblissement, et comporte avantageusement une face d'appui pour l'utilisateur, laquelle peut être inclinée par rapport à l'axe général d'extension de la capacité.

Cette inclinaison est telle que les distances séparant la face d'appui de la paroi de l'enceinte délimitant la capacité, sont moindres vers l'extrémité proximale que vers l'extrémité distale de la capacité.

Selon un exemple préféré de réalisation de l'organe d'appui, celui-ci est composé d'une pluralité de picots équi-répartis, en quinconce notamment, sur la zone correspondante de la paroi de l'enceinte. Ces picots sont préférentiellement circonscrits par une cloison qui les entoure. Il est clair que les picots peuvent être remplacés par d'autres éléments facilitant la répartition de la pression.

Par ailleurs, l'extrémité distale de la capacité est de préférence conformée en calotte sphérique, qui comporte à son fond une fente à bords jointifs constituant l'orifice de vidange de la capacité. On notera que la conformation susvisée de l'extrémité distale de la capacité, en demi-sphère de préférence, favorise le maintien l'un contre l'autre des bords de la fente, et donc sa fermeture, lorsque la capacité est pleine.

La fente constituant l'orifice de vidange est orientée sensiblement parallèlement à l'orientation vers l'extérieur de l'organe d'appui. Ces dispositions sont telles que l'orientation de la fente correspond à celle de la poussée exercée par l'utilisateur sur l'organe d'appui, et finalement que cette poussée induit non seulement la déformation de la capacité, mais aussi l'ouverture de la fente pour la délivrance du produit.

Accessoirement, le dispositif comporte en outre un organe support pour le positionnement du dispositif sur un récipient de réception de la dose de produit délivré. Ce support est par exemple solidaire de la bride de maintien du dispositif sur le réservoir, voire solidaire de ce dernier. Cet organe support comporte avantageusement une butée située dans la zone d'affaiblissement de l'enceinte, à l'encontre de l'effet de poussée exercée par l'utilisateur contre l'organe d'appui, pour favoriser la fermeture de l'orifice de remplissage.

Cet organe support comporte aussi avantageusement et de manière analogue, une surface d'appui pour la paroi de l'enceinte délimitant la capacité, lors de la déformation de cette dernière.

On comprendra que selon un aspect avantageux de la présente invention, l'ensemble des parties du dispositif comprenant l'enceinte délimitant la capacité, la zone d'affaiblissement et la zone de jonction du dispositif au réservoir, constitue un élément monobloc évidé obtenu par moulage d'une matière plastique souple ou semi-rigide, telle que du type résine thermoplastique, par exemple caoutchouc naturel ou synthétique. De préférence, cette matière est le silicone.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure1 est une vue en perspective d'un premier mode de réalisation d'un dispositif comprenant une enceinte à paroi déformable selon l'invention.
Les figures 2 et 3 sont des vues en coupe longitudinale de l'enceinte représentée à la figure 1.
La figure 4 est une vue de dessus de l'enceinte représentée aux figures précédentes.
Les figures 5 et 6 sont des vues en coupe transversale selon respectivement A-A et B-B de l'enceinte représentée à la figure 3.
Les figures 7 à 9 sont des schémas illustrant successivement le mode opératoire de fonctionnement d'un dispositif de l'invention comprenant une enceinte telle qu'illustrée sur les figures précédentes.
Les figures 10 et 11 sont des schémas illustrant successivement le mode opératoire de fonctionnement d'un second mode de réalisation d'un dispositif comprenant une enceinte à paroi déformable selon l'invention.

### Description de modes particuliers de réalisation

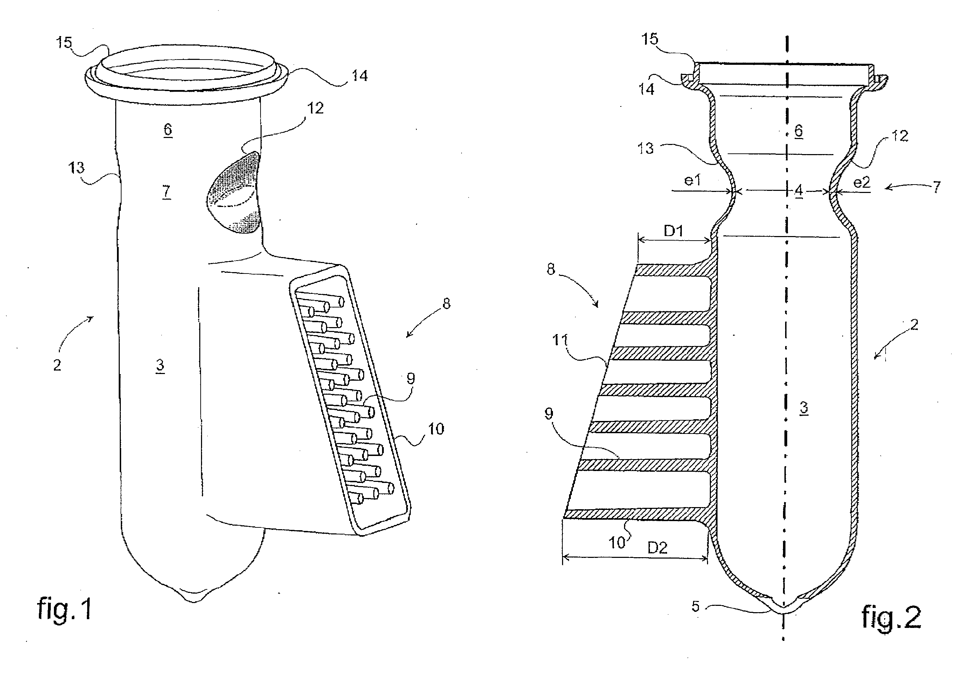

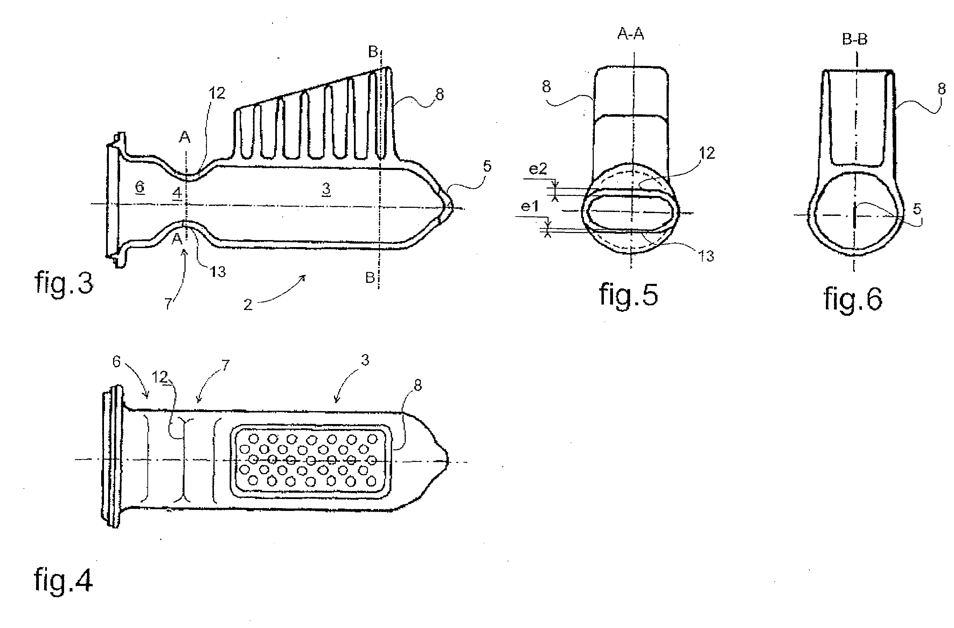

Selon un premier mode de réalisation représenté aux figures 1 à 9, un dispositif de dosage volumétrique de l'invention est prévu pour équiper un réservoir 1 à produit liquide ou pâteux, en vue d'une délivrance dosée et répétée de ce produit. Ce dispositif comprend principalement une enceinte 2 à paroi déformable, qui délimite une capacité 3 dont le volume naturellement maintenu en conformation, correspond à celui de la dose souhaitée. Cette capacité 3 comporte à son extrémité proximale un orifice de remplissage 4, et à son extrémité distale un orifice de vidange 5. L'enceinte 2 délimite en outre à son extrémité proximale une zone de jonction 6 avec le réservoir 1 de stockage du produit à délivrer.

Un tel dispositif présente selon l'invention la caractéristique selon laquelle l'enceinte 2 comporte une zone intermédiaire 7 interposée entre la capacité 3 et la zone de jonction 6. Cette zone intermédiaire 7, qui délimite l'orifice de remplissage 4 de la capacité 3, est une zone d'affaiblissement de l'enceinte 2, pour être prioritairement déformable sous l'effet d'une compression de la paroi de l'enceinte 2 délimitant la capacité 3, avant déformation de cette dernière en vue de la délivrance du produit qu'elle contient.

L'enceinte 2 est formée d'une paroi de révolution, comportant un organe latéral 8 d'appui contre lequel l'utilisateur exerce une poussée pour déformer par compression la capacité 3. Cet organe d'appui 8 est ménagé le long de la paroi de l'enceinte 2, dans sa zone délimitant la capacité 3, et est composé d'une pluralité de picots tels que 9, disposés en saillie et circonscrits par une cloison 10. Par ailleurs, la face 11 de l'organe d'appui contre laquelle l'utilisateur exerce une poussée est inclinée axialement. La distance D1 qui sépare cette face 11 de la paroi de l'enceinte 2, est plus faible à l'extrémité proximale de la capacité 3 que celle D2 prise à son extrémité distale.

L'orifice de vidange 5 de la capacité est formé d'une fente à bords jointifs orientée suivant l'extension vers l'extérieur de l'organe d'appui 8, c'est-à-dire dans le cas d'exemple illustré dans le sens d'extension des picots 9. Ces dispositions visent à orienter la fente dans le sens de la poussée exercée par l'utilisateur, pour favoriser son ouverture. En outre, l'extrémité distale de la capacité 3 est conformée en demi-sphère pour favoriser le maintien à la fermeture de la fente lorsque la capacité 3 est pleine. Pour favoriser ces effets d'ouverture et de fermeture, la fente est préférentiellement ménagée en bout de l'extrémité distale de la capacité 3 dans un renflement de cette dernière conformé en téton.

Pour former la zone d'affaiblissement 7 de l'enceinte, un rétreint est ménagé au voisinage de l'orifice de remplissage de la capacité. Ce rétreint est formé d'un couple de reliefs 12, 13 en creux opposés, dont la profondeur est orientée suivant l'extension de l'organe d'appui 11.

Le fléchissement de la zone d'affaiblissement 7 jusqu'au plaquage l'une contre l'autre des parois de l'enceinte 2 dans cette zone en vue de la fermeture de l'orifice de remplissage 4, est favorisé par une différence d'épaisseur de la paroi. Plus précisément, l'épaisseur e1 de la paroi de l'enceinte dans cette zone est plus faible sur la face de l'enceinte correspondante à celle où est ménagé l'organe d'appui, que l'épaisseur e2 de la paroi prise à sa face opposée.

La zone de jonction 6 de l'enceinte 2 comporte une collerette d'appui 14 contre la face d'extrémité du goulot du réservoir 1, ainsi qu'une lèvre axiale 15 pénétrant à l'intérieur d'une saignée périphérique ménagée dans le goulot. L'assemblage entre l'enceinte 2 et le goulot du réservoir 1 s'effectue par enserrement de ce dernier par la zone de jonction 6 de l'enceinte 2, cet assemblage étant verrouillé par une bride 16 vissée sur le goulot du réservoir.

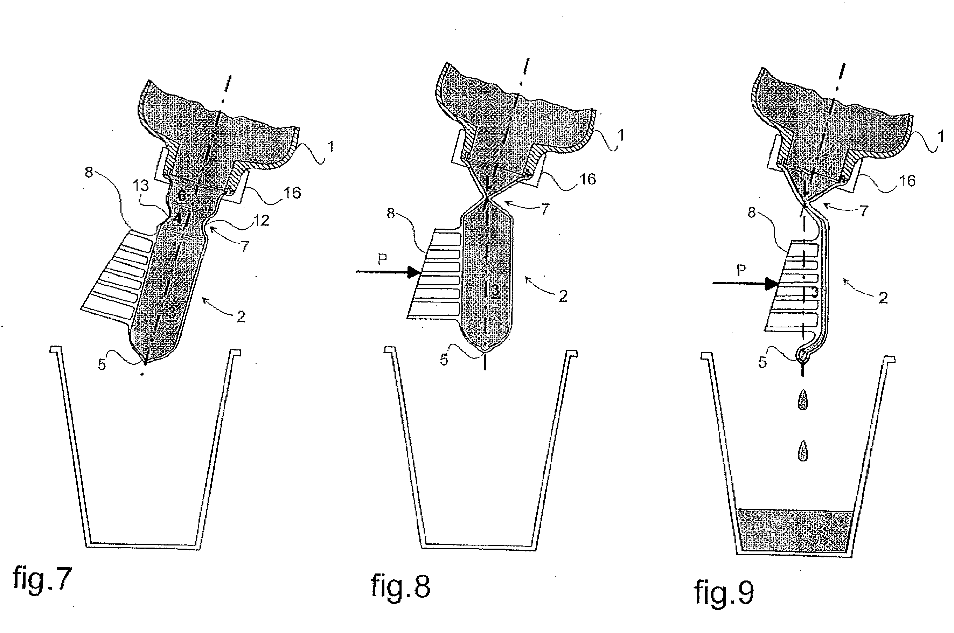

Comme représentée aux figures 7 à 9, l'enceinte 2 est naturellement disposée dans le prolongement du réservoir 1, lorsqu'elle se trouve spontanément maintenue en conformation (figure 7). Lorsque l'utilisateur exerce une poussée P contre l'organe d'appui 8, la zone d'affaiblissement 7 se déforme prioritairement en fléchissant jusqu'à mise en contact l'une contre l'autre des parois délimitant l'orifice de remplissage 4 de la capacité 3. La continuité du geste de poussée P exercé par l'utilisateur contre l'organe d'appui 8 provoque ensuite la déformation globale de la capacité 3, jusqu'au plaquage l'une contre l'autre de ses parois et sa vidange complète. Lorsque l'utilisateur a vidé la capacité 3, il peut cesser de comprimer l'enceinte 2, qui retrouve spontanément sa forme initiale, avec ouverture de l'orifice de remplissage 4 pour l'introduction d'une dose suivante de produit à l'intérieur de la capacité 3.

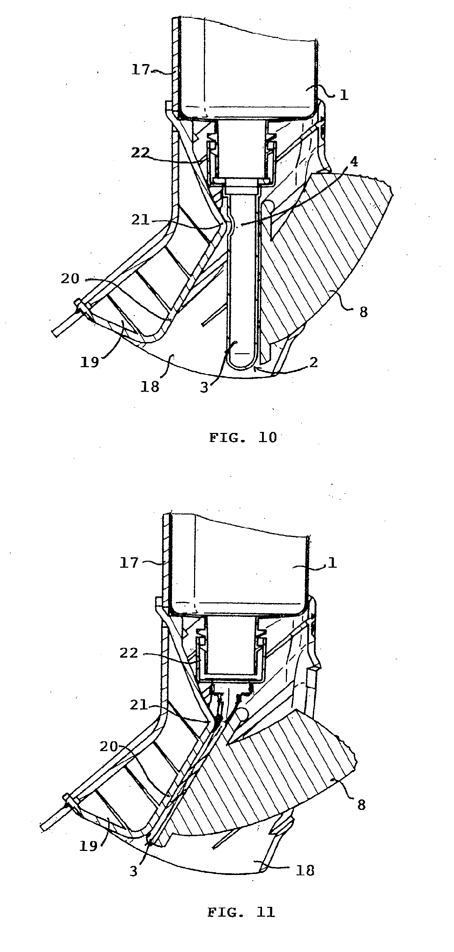

Selon un autre mode de réalisation représenté aux figures 10 et 11, le réservoir 1 à produit liquide ou pâteux est solidaire d'une paroi 17 d'un système de distribution 18, de manière à maintenir verticalement le réservoir 1 muni du dispositif de dosage volumétrique. La paroi 17 du système de distribution 18 comporte un élément de compression 19 faisant saillie vers l'enceinte 2 du dispositif de dosage volumétrique. L'élément de compression 19 comporte une paroi 20 sur laquelle est destinée à être comprimée la paroi de l'enceinte 2 du dispositif de dosage volumétrique. Le système de distribution 18 comporte également un organe d'appui 8 disposé de l'autre côté de l'enceinte 2 et pouvant être animé d'un mouvement de rotation. En exerçant une pression sur l'organe d'appui 8, celui-ci pivote et comprime la paroi de l'enceinte 2 contre l'élément de compression 19. L'élément de compression 19 comporte également un rebord 21 destiné à coopérer avec la zone d'affaiblissement 7 de l'enceinte 2. Ainsi, lorsque l'enceinte 2 est comprimée entre la paroi de l'élément de compression et l'organe d'appui 8, la capacité 3 se déforme et le rebord 21 permet d'obturer l'orifice de remplissage 4.

Le réservoir et le dispositif de dosage volumétrique comportent, de préférence, des moyens d'indexation destinés à provoquer l'ouverture de la fente du dispositif de dosage volumétrique dans le sens de la pression exercée sur la paroi de l'enceinte 2. Ainsi, la paroi du réservoir 1 peut comporter un méplat permettant de placer le réservoir 1 sur le système de distribution 18, selon une position prédéterminée. Le réservoir 1 comporte, de préférence, une bague 22 maintenant le dispositif de dosage volumétrique solidaire du goulot du réservoir 1. La bague 22 comporte, de préférence, des moyens d'indexation permettant de placer la zone d'affaiblissement 4 en regard du rebord 21 de l'élément de compression 19.

Le dispositif de dosage volumétrique selon l'invention présente de nombreux avantages, qui résident dans le fait :
- qu'il ne comporte aucune pièce distincte en mouvement relatif l'une par rapport à l'autre,
- que l'ensemble monobloc susvisé permet d'obtenir les fonctions cumulées de dosage fiable du produit délivré, de clapet d'obturation des orifices de remplissage, de vidange et d'évent, de retour spontané de la capacité en position initiale de remplissage, et d'étanchéité du réservoir vis à vis de l'environnement extérieur,
- que l'ensemble monobloc susvisé ne nécessite aucun entretien, compte tenu de l'absence de pièce d'usure et de zone de rétention, à son extrémité distale notamment,
- qu'il est particulièrement adapté pour la délivrance de produits susceptibles d'être altérés par leur mise à l'atmosphère, tels que produits alimentaires ou pharmaceutiques, et de produits susceptibles de cristalliser rapidement à l'air, compte tenu de la restriction du contact du produit avec l'environnement extérieur, grâce à la fermeture à l'état de repos de l'orifice de vidange et à une autorisation minimale de l'introduction d'air à l'intérieur de la capacité lors de son remplissage,
- qu'il est aussi particulièrement adapté pour la délivrance de produits sujets à décantation, compte tenu que le remplissage de la capacité induit une agitation du produit à l'encontre de cette décantation.

## Revendications

1. Dispositif de dosage volumétrique à capacité variable, ce dispositif comprenant une enceinte (2) à paroi déformable délimitant la capacité (3), cette dernière (3) comportant à son extrémité proximale un orifice de remplissage (4) et à son extrémité distale un orifice de vidange (5), l'enceinte (2) délimitant en outre à son extrémité proximale une zone de jonction (6) avec un réservoir (1) de stockage du produit à délivrer, **caractérisé en ce que**
- l'enceinte (2) comporte une zone intermédiaire interposée entre la capacité (3) et la zone de jonction (6), qui délimite l'orifice de remplissage (4) de la capacité (3),
- cette zone intermédiaire étant une zone d'affaiblissement (7) de l'enceinte (2) qui est prioritairement déformable sous l'effet d'une compression de la paroi de l'enceinte (2) délimitant la capacité (3), avant déformation de cette dernière en vue de la délivrance du produit qu'elle contient, de telle sorte qu'une compression de l'enceinte (2) exercée par l'utilisateur en vue de réduire le volume de la capacité (3) pour en extraire une dose de produit, provoque spontanément au préalable, à partir de ce même geste, la fermeture de l'orifice de remplissage (4),
- ladite zone d'affaiblissement (7) étant formée d'au moins un rétreint (12,13) ménagé à l'extrémité proximale de la capacité (3).

2. Dispositif selon la revendication 1, **caractérisé en ce que** la conformation globale de l'enceinte (2) étant une conformation de révolution, le rétreint (12,13) est formé d'au moins un relief en creux occupant partiellement la périphérie de l'enceinte (2) dans la zone de l'orifice de remplissage (4) de la capacité (3).

3. Dispositif selon l'une quelconque des revendications 1 et 2, **caractérisé en ce que** l'épaisseur (e1) de la paroi de l'enceinte (2) délimitant le rétreint (12,13) est localement plus faible, pour favoriser son fléchissement sur elle-même lors de la compression de l'enceinte (2) exercée par l'utilisateur.

4. Dispositif selon l'une quelconque des revendications précédentes, **caractérisé en ce que** la zone d'affaiblissement (7) de l'enceinte (2) est prolongée par la zone de jonction (6) du dispositif au réservoir (1) contenant le produit à délivrer, cette zone de jonction (6) étant conformée en gaine d'enserrement du goulot du réservoir (1).

5. Dispositif selon la revendication 4, **caractérisé en ce que** la zone de jonction (6) comporte à son débouché proximal une collerette (14) d'appui axial pour un organe de verrouillage (16) de la jonction de l'enceinte (2) sur le réservoir (6).

6. Dispositif selon l'une quelconque des revendications précédentes, **caractérisé en ce que** la paroi de l'enceinte (2) délimitant la capacité (3) comporte un organe d'appui (8) pour l'utilisateur visant à sa déformation, cet organe d'appui (8) étant ménagé avec une orientation en correspondance avec la déformation recherchée de la zone d'affaiblissement (7), et comportant une face d'appui (11) pour l'utilisateur qui est inclinée par rapport à l'axe général d'extension de la capacité (3), de telle sorte que les distances (D1,D2) séparant la face d'appui de la paroi de l'enceinte (2) délimitant la capacité (3), sont moindres vers l'extrémité proximale que vers l'extrémité distale de la capacité (3).

7. Dispositif selon la revendication 6, **caractérisé en ce que** l'organe d'appui (8) est composé d'une pluralité d'éléments (9) équirépartis sur la zone correspondante de la paroi de l'enceinte (2).

8. Dispositif selon l'une quelconque des revendications précédentes, **caractérisé en ce que** l'extrémité distale de la capacité (3) est conformée en calotte sphérique, qui comporte à son fond une fente à bords jointifs constituant l'orifice de vidange (5) de la capacité (3), cette fente étant orientée sensiblement parallèlement à l'orientation vers l'extérieur de l'organe d'appui (8), de telle sorte que l'orientation de la fente corresponde à celle de la poussée (P) exercée par l'utilisateur sur l'organe d'appui (8), et finalement que cette poussée (P) induise non seulement la déformation de la capacité (3), mais aussi l'ouverture de la fente pour la délivrance du produit.

9. Dispositif selon l'une quelconque des revendications précédentes, **caractérisé en ce que** l'ensemble des parties du dispositif comprenant l'enceinte (2) délimitant la capacité (3), la zone d'affaiblissement (7) et la zone de jonction (6) du dispositif au réservoir, constitue un élément monobloc évidé obtenu par moulage d'une matière plastique, et qu'il comporte en outre un organe support pour le positionnement du dispositif sur un récipient de réception de la dose de produit délivré, cet organe support comportant une butée située dans la zone d'affaiblissement de l'enceinte et une surface d'appui pour la paroi de l'enceinte délimitant la capacité.

10. Système de distribution comportant un réservoir (1) à produit liquide ou pâteux muni d'un dispositif de dosage volumétrique selon l'une quelconque des revendications 1 à 9, **caractérisé en ce qu'**il comporte des moyens d'indexation destinés à provoquer l'ouverture de la fente du dispositif de dosage volumétrique dans le sens de la pression exercée sur la paroi de l'enceinte (2).
